# EUROPEAN PATENT APPLICATION

(11) **EP 2 728 468 A1**
(43) Date of publication of application: **07.05.2014**
(21) Application number: 12805223.0
(22) Date of filing: 19.03.2012
(51) Int. Cl.: G06F 9/45

(54) **METHOD FOR SKIN-CHANGING FOR THIRD-PARTY APPLICATION**

(30) Priority: 30.06.2011 CN 201110181919
(71) Applicant: Xiaomi Inc., Beijing 100085 (CN)
(72) Inventor: LI, Weixing, Haidian District Beijing 100085 (CN); SUN, Peng, Haidian District Beijing 100085 (CN); LIU, Xinyu, Haidian District Beijing 100085 (CN); WANG, Yahui, Haidian District Beijing 100085 (CN); DONG, Hongguang, Haidian District Beijing 100085 (CN); REN, Tian, Haidian District Beijing 100085 (CN); XU, Fei, Haidian District Beijing 100085 (CN); ZHANG, Bin, Haidian District Beijing 100085 (CN); LIANG, Feng, Haidian District Beijing 100085 (CN); LI, Wanqiang, Haidian District Beijing 100085 (CN); HUANG, Jiangji, Haidian District Beijing 100085 (CN)
(74) Representative: Spachmann, Holger
(86) International application number: PCT/CN2012/072549
(87) International publication number: WO 2013/000295

(57) **Abstract**

The present disclosure discloses a method of re-skinning with a third party's application, which permits to establish a resource file package of the third party's application, including a resource file ID, resource file storage path and a mapping relation between them; establishing a subject file package according to the directory structure in the resource file package of the third party's application; said subject file package includes a resource files of the third party's application to be replaced for presentation; when the third party's application requires generating a user interface presentation, the resource file ID required for user interface presentation will be sent to the operating system; the operating system obtains the respective resource file storage path from the resource file package according to the resource file ID; and also obtains the resource files to be replaced for user interface presentation from the subject file package; then sends to the third party's application the resource files to be replaced for user interface presentation, and the third party's application allows for re-skinning the user interface presentation using the resource files to be replaced for user interface presentation.

With the technical scheme of the present disclosure, unlimited resource files are available for colorful presentation effects of the third party application.

## Description

### Field of the Invention

The present disclosure relates to a mobile terminal technology, and more particularly to a method of re-skinning of a third party's application.

### Background Information

With the development of mobile terminal technology, the mobile terminal has become an indispensable personal electronic device in people's (the user's) everyday life, whereby people may gain access to information, conduct their office work and entertain themselves. Due to a smaller number of types and models of mobile terminals in relation to the huge user groups, users have to change constantly the graphical user interface presentation effect of various applications on the mobile terminal to suit their personal preferences.

As for re-skinning of the existing applications, some resource files are arranged in the resource file packages during development of the applications by the program developers; when a user employs the application, the desired presentation effect may be selected from different resource files. Yet, only a limited number of preset resource files are available for re-skinning, and there is little room for options for users, let alone updating.

### Summary of the Invention

The purpose of the present disclosure is to provide a method of re-skinning of a third party's application, which could provide unlimited resource files and improve the presentation effect of various applications.

To this end, the present disclosure adopts the following technical scheme:
A method of re-skinning with the third party's applications suitable for android systems, comprising the following steps:
   A: Establishing a resource file package of a third party's application, the resource file package includes resource file ID, resource file storage path and a mapping relation between them;
   B: Establishing a subject file package according to the directory structure in the resource file package of the third party's application, the subject file package includes the resource files of the third party's application to be replaced for user interface presentation;
   C: Sending the resource file ID required for user interface presentation to the operating system by the third party's application, when the third party's application requires generating a user interface presentation;
   D: Obtaining a respective resource file storage path from the resource file package according to the resource file ID by the operating system;
   E: Obtaining the resource files to be replaced for presentation from the subject file package according to the resource file storage path by the operating system;
   F: Sending the resource files to be replaced for presentation to the third party's application by the operating system and allowing for re-skinning the user interace presentation using the resource files to be replaced for user interface presentation by the third party's application.

The resource file package of the third party's application includes the resource files of the third party's application for presentation; if the resource files of the third party's application to be replaced for presentation are not found by the operating system in the subject file package, the resource files for presentation are obtained from the resource file package of the third party's application.

With the technical scheme of the present disclosure, any individuals, including the users, may add resource files to a third party's application, thus constantly updating the presentation effect of the third party's application.

### Description of the drawings

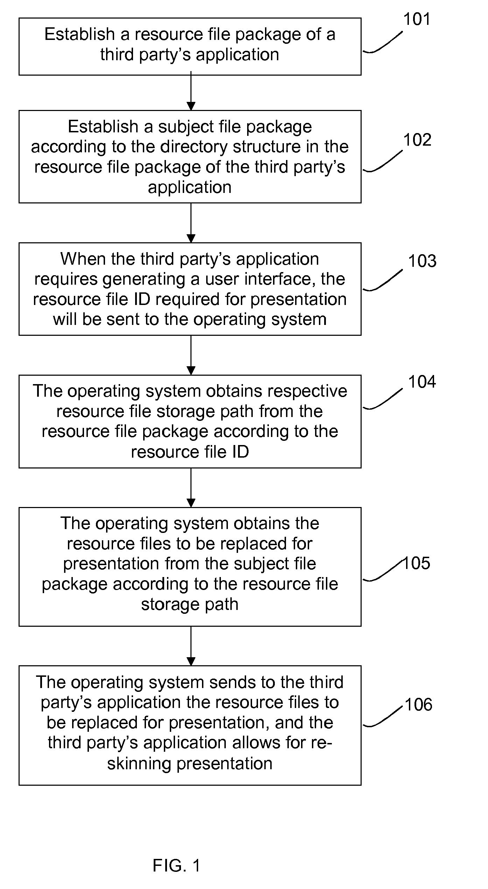

Figure 1 is a flow process chart of re-skinning with the third party's application in the preferred embodiment of the present disclosure.

### Detailed Description of the preferred embodiments

The preferred embodiment of the technical scheme of the present disclosure is further described with reference to the accompanying drawings.

Figure 1 is a flow process chart of re-skinning of a third party's application in the preferred embodiment of the present disclosure. Referring to FIG. 1, the re-skinning process of the third party's application contains the following steps:
Step 101: Establishing a resource file package of a third party's application, and the resource file package is provided with resource files of the third party's application for presentation, and includes resource file ID, resource file storage path and the mapping relation between them.
Step 102: Establishing a subject file package according to the directory structure in the resource file package of the third party's application, and the subject file package includes a resource file of the third party's application to be replaced for presentation, which shares the same storage path with a resource files in the resource file package for presentation.
Step 103: When the third party's application requires generating a user interface, the resource file ID required for presentation will be sent to the operating system by the third party's application.
Step 104: The operating system obtains a respective resource file storage path from the resource file package according to the resource file ID required for user interface presentation.
Step 105: The operating system looks for the resource files to be replaced for user interface presentation from the subject file package according to the resource file storage path.
   If resource files are replaced for presentation on the corresponding storage path of the subject file package, the operating system obtains the resource files replaced for presentation.
   If the operating system can not find the resource files of the third party's application replaced for presentation on the corresponding storage path of the subject file package, the resource files for presentation are obtained from the resource file package of the third party's application.
Step 106: The operating system sends the resource files to the third party's application to be replaced for user interface presentation, and the third party's application allows for re-skinning presentation using the resource files to be replaced for presentation.

If the operating system has not found the resource files of the third party's application replaced for presentation on the corresponding storage path of the subject file package, the resource files for presentation in the resource file package are sent to the third party's application, which will adopt the resource files for presentation by the third party's application.

The above is a detailed description of the technical features of the present disclosure based on a typical preferred embodiment. However, it should be appreciated that the present disclosure is capable of a variety of embodiments and various modifications by those skilled in the art, and all such variations or changes shall be embraced within the scope of the following claims.

## Claims

1. A method of re-skinning with a third party's application suitable for android systems, comprising the following steps:
A: Establishing a resource file package of the third party's application, wherein said resource file package includes a resource file ID, a resource file storage path and a mapping relation between them;
B: Establishing a subject file package according to a directory structure in the resource file package of the third party's application, the subject file package includes a resource files of the third party's application to be replaced for user interface presentation;
C: Sending the resource file ID required for user interface presentation to the operating system by the third party's application when the third party's application requires generating a user interface presentation;
D: Obtaining the respective resource file storage path from the resource file package according to the resource file ID by the operating system;
E. Obtaining the resource files to be replaced for presentation from the subject file package according to the resource file storage path by the operating system;
F: Sending the resource files to be replaced for user interface presentation to the third party's application by the operating system, and allowing for re-skinning the user interface presentation using the resource files to be replaced for presentation by the third party's application.

2. The method according to claim 1, wherein the resource file package of the third party's application includes the resource files of the third party's application for user interface presentation, in case that the resource files of the third party's application to be replaced for presentation are not found by the operating system in the subject file package, than the resource files for presentation are obtained from the resource file package of the third party's application.
